# FASCICULE DE BREVET EUROPEEN

(11) **EP 3 453 095 B1**
(45) Date de publication et mention de la délivrance du brevet: **21.08.2024**
(21) Numéro de dépôt: 17725322.6
(22) Date de dépôt: 02.05.2017
(51) Int. Cl.: H02J 3/28

(54) **PROCÉDÉ, PROGRAMME D'ORDINATEUR, SYSTÈME ET INSTALLATION POUR L'OPTIMISATION DU FONCTIONNEMENT D'UN RÉSEAU DE TRANSMISSION DE COURANT ÉLECTRIQUE**
VERFAHREN, COMPUTERPROGRAMM, SYSTEM UND VORRICHTUNG ZUR OPTIMIERUNG DES BETRIEBS EINES STROMÜBERTRAGUNGSNETZES
METHOD, COMPUTER PROGRAM, SYSTEM, AND EQUIPMENT FOR OPTIMISING THE FUNCTIONING OF AN ELECTRICAL CURRENT TRANSMISSION NETWORK

(30) Priorité: 04.05.2016 FR 1654059
(43) Date de publication de la demande: 13.03.2019
(73) Titulaire: RTE RESEAU DE TRANSPORT D'ELECTRICITE, 92073 Paris La Défense Cedex (FR)
(72) Inventeur: GAME, David, 91440 Bures-sur-Yvette (FR); PANCIATICI, Patrick, 92500 Rueil Malmaison (FR); GRABETTE, Olivier, 92430 Marnes la Coquette (FR)
(74) Mandataire: Bonnet, Michel
(86) Numéro de dépôt international: PCT/FR2017/051040
(87) Numéro de publication internationale: WO 2017/191402

(56) Documents cités:
- DENA DEUTSCHE ENERGIE-AGENTUR GMBH: "Ergebnispapier. Der Beitrag von Pumpspeicherwerken zur Netzstabilität und zur Versorgungssicherheit - die wachsende Bedeutung von Pumpspeicherwerken für die Energiewende.", INTERNET, 16 July 2015 (2015-07-16), XP002765776, Retrieved from the Internet <URL:https://www.dena.de/test/user_upload/150716_Ergebnispapier_Pumpspeicherwerke.pdf> [retrieved on 20170123]
- F. MERTEN, C. KRÜGER: "Synergieeffekte zwischen Gas- und Stromnetzen für die Energiewende", INTERNET, April 2015 (2015-04-01), pages 38 - 42, XP002765777, Retrieved from the Internet <URL:http://docplayer.org/27274503-Synergieeffekte-zwischen-gas-und-stromnetzen-fuer-die-energiewende.html> [retrieved on 20170123]
- ANONYMOUS: "Redispatch (Stromnetz)", INTERNET, 15 November 2015 (2015-11-15), XP002765778, Retrieved from the Internet <URL:https://de.wikipedia.org/w/index.php?title=Redispatch_(Stromnetz)&oldid=148074508> [retrieved on 20170123]

## Description

La présente invention concerne un procédé d'optimisation du fonctionnement d'un réseau de transmission de courant électrique. Elle concerne également un système correspondant ainsi qu'une installation de transmission optimisée de courant électrique mettant en oeuvre un tel procédé.

Elle porte plus précisément sur un procédé d'optimisation s'appliquant pour la gestion d'un réseau comportant au moins une ligne électrique, une pluralité d'unités de stockage d'énergie raccordées à une pluralité des extrémités de ladite au moins une ligne électrique et des contrôleurs de conversion d'énergie stockée en courant électrique ou réciproquement entre chaque unité de stockage et la ou les extrémité(s) de ligne(s) à laquelle ou auxquelles elle est raccordée, ce procédé comportant les étapes suivantes :
- maintien à jour en mémoire d'informations de remplissage de chacune des unités de stockage fournies par les contrôleurs de conversion,
- commande des contrôleurs de conversion, par l'envoi de commandes de stockage ou déstockage d'énergie dans ou à partir des unités de stockage.

Un tel procédé est généralement mis en oeuvre pour assurer à tout instant un certain équilibre entre l'offre et la demande en production et consommation de courant électrique.

En particulier, lorsque le réseau est alimenté en courant électrique par des sites de production à sources d'énergie renouvelable telles que des parcs d'éoliennes ou de panneaux solaires, par définition très dépendants des conditions climatiques, des unités de stockage peuvent être prévues sur ces sites de production. Un excédent temporaire d'énergie électrique obtenu par des conditions climatiques favorables peut ainsi être stocké localement si la demande en courant électrique n'est pas à la hauteur. De même un manque temporaire d'énergie électrique produite en raison de conditions climatiques défavorables peut être compensé sur site par une décharge de la ou des unités de stockage en cas de demande supérieure à la production. En résumé, les unités de stockage servent alors à compenser les aléas de production en fonction des contraintes de consommation. Un tel enseignement est par exemple détaillé dans les demandes de brevets US 2014/0163754 A1 et WO 2014/072278 A1.

Du côté des charges consommatrices de courant électrique, des unités de stockage de dispositifs d'alimentation sans interruption UPS (de l'anglais « Uninterruptible Power Supply ») peuvent aussi être prévues pour compenser certaines variations intempestives de fourniture en courant électrique par le réseau de transmission de courant électrique. Le procédé d'optimisation vise alors à fournir un courant alternatif stable et dépourvu de coupures ou de micro-coupures, quoi qu'il se produise sur le réseau. Un tel enseignement est par exemple détaillé dans la demande de brevet CA 2 869 910 A1.

Malheureusement, ces procédés ne sont pas prévus pour faire face aux risques sporadiques de congestion d'un réseau. Ces risques sont accrus lorsque le réseau est alimenté par des sites de production à sources d'énergie renouvelable et fournit des sites de consommation tels que des bornes de recharge de véhicules électriques. En particulier, dans le cas d'un réseau de transmission de courant électrique tendant à fonctionner de plus en plus souvent en limite de capacité notamment parce qu'il est dimensionné au plus juste pour être exploité au maximum de ses capacités, cela peut conduire à l'endommagement de lignes électriques, des déconnexion intempestives, des coupures de service.

Il n'est alors généralement pas envisagé d'autres solutions que de construire de nouvelles lignes électriques ou de renforcer les lignes existantes pour créer de nouvelles capacités de transmission. Outre les coûts associés, l'impact sur les territoires traversés est souvent mal accepté par la population locale lorsqu'il s'agit de lignes électriques à haute tension.

Dans une moindre mesure, il est possible de résoudre au moins en partie les problèmes de congestion :
- en réorientant les flux : mais cela suppose que des trajets alternatifs non surchargés soient disponibles dans le réseau et les gains sont limités, ou
- en augmentant l'efficacité ou le rendement de lignes existantes, par exemple en intégrant des éléments générateurs de puissance réactive dont le déficit limite la capacité à faire transiter la puissance active, c'est-à-dire la puissance réellement utile, ou par exemple en développant des mesures dynamique de la température des lignes pour les exploiter au plus près de leurs limites physiques : mais les gains sont alors vraiment limités.

Il peut ainsi être souhaité de concevoir un procédé d'optimisation du fonctionnement d'un réseau de transmission de courant électrique, notamment apte à faire face à des risques sporadiques de congestion, à moindre coût et moindre impact, tout en assurant une véritable augmentation de capacité temporaire du réseau lors de fortes productions ou demandes de courant électrique.

Les documents "dena Deutsche Energie-Agentur GmbH: "Ergebnispapier. Der Beitrag von Pumpspeicherwerken zur Netzstabilität und zur Versorgungssicherheit - die wachsende Bedeutung von Pumpspeicherwerken für die Energiewende.", 16 juillet 2015" et "F. Merten, C. Krüger: "Synergieeffekte zwischen Gas- und Stromnetzen für die Energiewende", avril 2015" divulguent des procédés similaires.

Il est donc proposé un procédé d'optimisation du fonctionnement d'un réseau de transmission de courant électrique selon la revendication 1.

Ainsi, grâce à un tel procédé, il est possible d'exploiter les capacités de stockage réparties dans le réseau pour simuler, à un moment donné de forte offre ou demande en courant électrique, une transmission de courant électrique entre les ensembles E1 et E2 supérieure à ce qu'elle est réellement. Les unités de stockage sollicitées peuvent ensuite être rééquilibrées lorsque l'offre ou la demande est moins forte. En d'autres termes, les unités de stockage sont exploitées pour éviter ou résorber des congestions temporaires du réseau sans avoir d'impact sur l'équilibre offre/demande en courant électrique et de façon entièrement transparente dans les flux transmis. Les stockages et déstockages conjoints d'une même quantité Q de courant électrique permettent d'induire des flux à contresens des congestions prévues ou observées pour les compenser. Des lignes virtuelles sont ainsi temporairement créées, leur longueur pouvant être aussi grande que souhaité. Il n'y a en effet aucune contrainte de fonctionnement sur la distance séparant les ensembles E1 et E2. Par rapport à la solution de construction ou de renforcement des lignes existantes, l'impact sur les territoires traversés est quasi nul pour une efficacité comparable.

De façon optionnelle, les commandes de stockage et déstockage adressées lors de l'activation de la transmission virtuelle de la quantité Q de courant électrique sont exécutées par les contrôleurs de conversion concernés pour un bilan énergétique total nul des unités de stockage des ensembles S1 et S2, aux pertes de rendements énergétiques près.

Selon l'invention, un remplissage de référence est prédéterminé pour chacune des unités de stockage, le procédé comportant en outre, suite à l'étape d'activation de la transmission virtuelle, une étape de reconstitution selon laquelle les contrôleurs de conversion des unités de stockage sollicitées lors de la transmission virtuelle commandent leur stockage ou déstockage d'énergie en vue d'atteindre leur remplissage de référence.

De façon optionnelle également, l'étape de reconstitution est exécutée de manière à ne jamais solliciter un dépassement de capacité maximale de transmission de courant électrique de ladite au moins une ligne électrique.

De façon optionnelle également, chaque ligne électrique présente une capacité maximale de transmission de courant électrique et la transmission virtuelle de la quantité Q de courant électrique est activée lorsqu'au moins une ligne électrique située entre les ensembles E1 et E2 est sollicitée pour transmettre temporairement une quantité de courant électrique dépassant sa capacité maximale d'une quantité supérieure ou égale à la quantité Q.

De façon optionnelle également :
- un sens principal de congestion d'au moins une ligne électrique dans le réseau est déterminé, et
- les sélections des premier et deuxième ensembles S1, S2 sont réalisées pour orienter la transmission virtuelle dans ce sens principal de congestion.

Il est également proposé un système d'optimisation du fonctionnement d'un réseau de transmission de courant électrique selon la revendication 6.

Il est également proposé une installation de transmission optimisée de courant électrique comportant :
- un réseau de transmission de courant électrique comportant :
   - au moins une ligne électrique,
   - une pluralité d'unités de stockage d'énergie raccordées à une pluralité des extrémités de ladite au moins une ligne électrique, et
   - des contrôleurs de conversion d'énergie stockée en courant électrique ou réciproquement entre chaque unité de stockage et la ou les extrémité(s) de ligne(s) à laquelle ou auxquelles elle est raccordée,
- un système d'optimisation selon l'invention, et
- un réseau de télécommunication pour un échange des informations de remplissage et des commandes de stockage/déstockage entre l'unité de commande du système d'optimisation et les contrôleurs de conversion du réseau de transmission de courant électrique.

De façon optionnelle, les unités de stockage peuvent être disposées à l'intérieur de postes électriques de raccordement de lignes électriques du réseau de transmission de courant électrique.

L'invention sera mieux comprise à l'aide de la description qui va suivre, donnée uniquement à titre d'exemple et faite en se référant aux dessins annexés dans lesquels :
- la figure 1 représente schématiquement la structure générale d'une installation de transmission optimisée de courant électrique, selon un mode de réalisation de l'invention,
- la figure 2 illustre un exemple de topologie d'un réseau de transmission de courant électrique de l'installation de la figure 1,
- les figures 3A et 3B illustrent des scénarios de transmission virtuelle et reconstitution, exécutés sur une ligne électrique conformément à un procédé d'optimisation du fonctionnement d'un réseau de transmission de courant électrique selon l'invention,
- la figure 4 illustre les étapes successives d'un procédé d'optimisation du fonctionnement d'un réseau de transmission de courant électrique, selon un premier mode de réalisation de l'invention permettant l'exécution des scénarios des figures 3A et 3B,
- les figures 5A et 5B illustrent des scénarios de transmission virtuelle et reconstitution, exécutés sur des portions de réseau électrique conformément à un procédé d'optimisation du fonctionnement d'un réseau de transmission de courant électrique selon l'invention,
- la figure 6 illustre les étapes successives d'un procédé d'optimisation du fonctionnement d'un réseau de transmission de courant électrique, selon un deuxième mode de réalisation de l'invention permettant l'exécution des scénarios des figures 5A et 5B,
- les figures 7A et 7B illustrent deux autres scénarios de transmissions virtuelles, pouvant être exécutés sur une portion de réseau électrique conformément au procédé d'optimisation de la figure 6,
- la figure 8 illustre un scénario évoluant dans le temps de transmissions virtuelles et reconstitutions quelconques, exécuté sur une portion de réseau électrique conformément à un procédé d'optimisation du fonctionnement d'un réseau de transmission de courant électrique selon l'invention, et
- la figure 9 illustre les étapes successives d'un procédé d'optimisation du fonctionnement d'un réseau de transmission de courant électrique, selon un troisième mode de réalisation de l'invention permettant l'exécution du scénario de la figure 8.

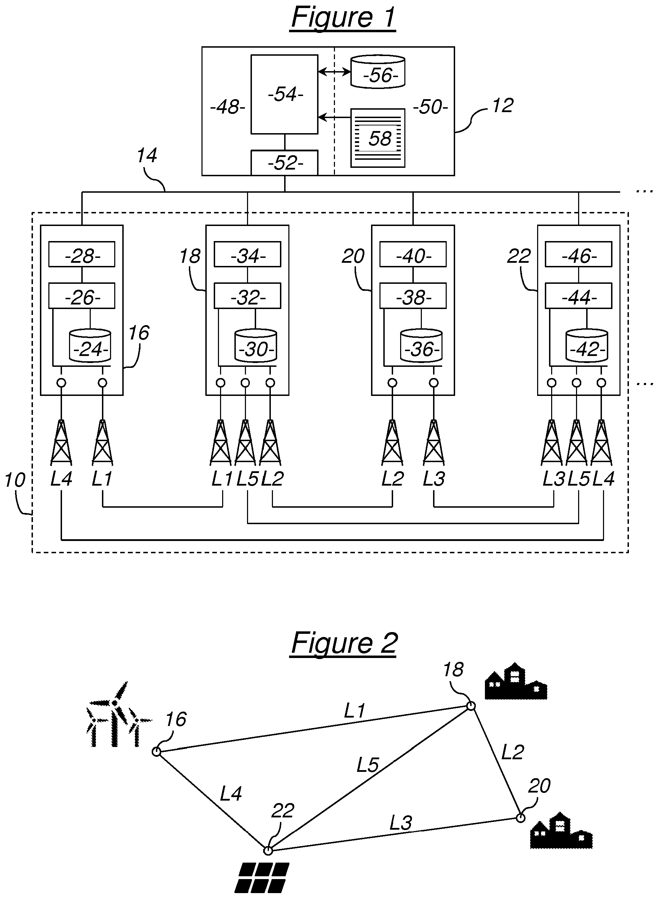

L'installation illustrée schématiquement sur la figure 1 comporte un réseau 10 de transmission de courant électrique, un système 12 d'optimisation du fonctionnement du réseau 10 et un réseau de télécommunication 14 pour un échange de données entre le système d'optimisation 12 et certains éléments du réseau 10.

Le réseau 10 comporte plusieurs postes électriques formant certains de ses noeuds. Chaque poste électrique est électriquement raccordé à au moins une extrémité de ligne électrique, chaque ligne étant elle-même une ligne de transport ou de distribution de courant électrique à haute, moyenne ou basse tension. En particulier, les lignes à haute tension du réseau 10 s'étendent d'un poste électrique à un autre.

Dans cet exemple particulier non limitatif, le réseau 10 comporte quatre postes électriques 16, 18, 20 et 22, chacun étant défini, par la Commission Electrotechnique Internationale IEC (de l'anglais « International Electrotechnical Commission »), comme une « partie d'un réseau électrique, située en un même lieu, comprenant principalement les extrémités des lignes de transport ou de distribution, de l'appareillage électrique, des bâtiments, et, éventuellement, des transformateurs ». Un poste électrique est donc un élément du réseau de transmission de courant électrique servant à la fois au transport et à la distribution d'électricité. Il permet d'élever la tension électrique pour sa transmission à haute tension, et de la redescendre en vue de sa consommation par des utilisateurs (particuliers ou industriels). La disposition relative des quatre postes électriques 16, 18, 20 et 22 est quelconque et ne correspond pas à l'illustration dans laquelle ils sont alignés par commodité. Ils forment les quatre sommets d'un quadrilatère quelconque dont chaque côté peut mesurer plusieurs kilomètres voire dizaines ou centaines de kilomètres. Le réseau 10 est aussi par exemple un sous-réseau d'un réseau quelconque plus important et complet, notamment à couverture nationale.

Dans cet exemple particulier non limitatif également, le réseau 10 comporte une ligne électrique L1 s'étendant entre le poste 16 et le poste 18, une ligne électrique L2 s'étendant entre le poste 18 et le poste 20, une ligne électrique L3 s'étendant entre le poste 20 et le poste 22, une ligne électrique L4 s'étendant entre le poste 22 et le poste 16 et une ligne électrique L5 s'étendant entre le poste 18 et le poste 22.

Le réseau 10 comporte en outre une pluralité d'unités de stockage d'énergie raccordées à au moins une partie des extrémités des lignes électriques L1, L2, L3, L4 et L5. Ces unités de stockage comportent par exemple des batteries électrochimiques, des supercondensateurs, des volants d'inertie, des stations hydrauliques de pompage-turbinage, ou autres. Dans l'exemple de la figure 1, elles sont réparties dans les postes électriques. Dans ce cas, leur impact sur les territoires traversés par les lignes électriques L1, L2, L3, L4 et L5 est nul.

Une unité de stockage 24 est ainsi installée à l'intérieur du poste électrique 16. Elle est raccordée aux extrémités de lignes L1 et L4 qui arrivent dans ce poste électrique. Un dispositif de conversion 26 conventionnel permet de convertir de l'énergie stockée dans l'unité 24 en courant électrique destiné à être transmis par au moins l'une des lignes électriques L1 et L4. Réciproquement, il permet de convertir du courant électrique transmis par au moins l'une des lignes électriques L1 et L4 en énergie à stocker dans l'unité 24. Ce dispositif de conversion 26 est lui-même commandé par un contrôleur de conversion 28 qui fait interface avec le système d'optimisation 12 : plus précisément, le contrôleur 28 est apte à fournir une information de remplissage de l'unité de stockage 24 au système d'optimisation 12 ; il est en outre apte à contrôler des conversions d'énergie dans un sens ou dans l'autre en fonction de commandes de stockage (pour une conversion de courant électrique transmis par au moins l'une des lignes électriques L1 et L4 en énergie à stocker dans l'unité 24) ou de déstockage (pour une conversion d'énergie stockée dans l'unité 24 en courant électrique à transmettre par au moins l'une des lignes électriques L1 et L4) qu'il reçoit du système d'optimisation 12.

De même, une unité de stockage 30 est installée à l'intérieur du poste électrique 18. Elle est raccordée aux extrémités de lignes L1, L2 et L5 qui arrivent dans ce poste électrique. Un dispositif de conversion 32 permet de convertir de l'énergie stockée dans l'unité 30 en courant électrique destiné à être transmis par au moins l'une des lignes électriques L1, L2 et L5. Réciproquement, il permet de convertir du courant électrique transmis par au moins l'une des lignes électriques L1, L2 et L5 en énergie à stocker dans l'unité 30. Ce dispositif de conversion 32 est lui-même commandé par un contrôleur de conversion 34 qui fait interface avec le système d'optimisation 12 : plus précisément, le contrôleur 34 est apte à fournir une information de remplissage de l'unité de stockage 30 et à contrôler des conversions d'énergie dans un sens ou dans l'autre en fonction de commandes de stockage ou de déstockage qu'il reçoit du système d'optimisation 12.

De même, une unité de stockage 36 est installée à l'intérieur du poste électrique 20. Elle est raccordée aux extrémités de lignes L2 et L3 qui arrivent dans ce poste électrique. Un dispositif de conversion 38 permet de convertir de l'énergie stockée dans l'unité 36 en courant électrique destiné à être transmis par au moins l'une des lignes électriques L2 et L3. Réciproquement, il permet de convertir du courant électrique transmis par au moins l'une des lignes électriques L2 et L3 en énergie à stocker dans l'unité 36. Ce dispositif de conversion 38 est lui-même commandé par un contrôleur de conversion 40 qui fait interface avec le système d'optimisation 12 : plus précisément, le contrôleur 40 est apte à fournir une information de remplissage de l'unité de stockage 36 et à contrôler des conversions d'énergie dans un sens ou dans l'autre en fonction de commandes de stockage ou de déstockage qu'il reçoit du système d'optimisation 12.

De même, une unité de stockage 42 est installée à l'intérieur du poste électrique 22. Elle est raccordée aux extrémités de lignes L3, L4 et L5 qui arrivent dans ce poste électrique. Un dispositif de conversion 44 permet de convertir de l'énergie stockée dans l'unité 42 en courant électrique destiné à être transmis par au moins l'une des lignes électriques L3, L4 et L5. Réciproquement, il permet de convertir du courant électrique transmis par au moins l'une des lignes électriques L3, L4 et L5 en énergie à stocker dans l'unité 42. Ce dispositif de conversion 44 est lui-même commandé par un contrôleur de conversion 46 qui fait interface avec le système d'optimisation 12 : plus précisément, le contrôleur 46 est apte à fournir une information de remplissage de l'unité de stockage 42 et à contrôler des conversions d'énergie dans un sens ou dans l'autre en fonction de commandes de stockage ou de déstockage qu'il reçoit du système d'optimisation 12.

Le système d'optimisation 12 est par exemple mis en oeuvre dans un dispositif informatique tel qu'un ordinateur classique et comporte alors au moins une unité de traitement 48 associée en lecture/écriture à au moins une mémoire 50 (par exemple une mémoire RAM) pour le stockage de fichiers de données et de programmes d'ordinateurs.

L'unité de traitement 48 comporte une interface 52 de connexion au réseau de télécommunication 14. Elle comporte en outre au moins un calculateur 54, par exemple un microprocesseur, apte à traiter des données fournies par l'interface 52 ou stockées en mémoire 50 et à émettre des commandes à destination du réseau 10, notamment à destination des contrôleurs de conversion 28, 34, 40 et 46. En cela, le calculateur 54 remplit une fonction d'unité de commande.

La mémoire 50 est partitionnée en une première zone 56 de stockage de données de traitement et une deuxième zone 58 de stockage de programmes d'ordinateurs. Cette partition est purement fonctionnelle, choisie pour une présentation claire du système d'optimisation 12, mais ne reflète pas nécessairement l'organisation réelle de la mémoire 50.

La première zone de stockage 56 comporte ainsi notamment les informations mises à jour de remplissage de chacune des unités de stockage 24, 30, 36, 42 telles qu'elles sont fournies régulièrement par chacun des contrôleurs de conversion 28, 34, 40, 46 de chacun des postes électriques 16, 18, 20, 22 au système d'optimisation 12.

La deuxième zone de stockage 58 comporte fonctionnellement un ou plusieurs programme(s) d'ordinateur(s). En variante, les fonctions réalisées par ce ou ces programme(s) pourraient être au moins en partie micro programmées ou micro câblées dans des circuits intégrés dédiés. Ainsi, en variante, le dispositif informatique mettant en oeuvre l'unité de traitement 48 et sa mémoire 50 pourrait être remplacé par un dispositif électronique composé uniquement de circuits numériques (sans programme d'ordinateur) pour la réalisation des mêmes fonctions.

Le ou les programme(s) d'ordinateur(s) de la deuxième zone de stockage 58 comporte(nt) des lignes d'instructions pour adresser des commandes de stockage ou déstockage d'énergie dans ou à partir des unités de stockage 24, 30, 36 et 42. Plus précisément et conformément à la présente invention, ces lignes d'instructions sont définies de manière à permettre à l'unité de commande 54 de :
- sélectionner un premier ensemble S1 d'au moins une unité de stockage raccordée à un premier ensemble E1 d'au moins une extrémité de ligne,
- sélectionner un deuxième ensemble S2 d'au moins une unité de stockage raccordée à un deuxième ensemble E2 d'au moins une extrémité de ligne,
- en fonction des informations de remplissage maintenues à jour en mémoire 50, activer une transmission virtuelle d'une quantité Q de courant électrique depuis le premier ensemble E1 vers le deuxième ensemble E2 en adressant conjointement aux contrôleurs de conversion concernés :
   - au moins une première commande de stockage d'une quantité d'énergie, correspondant à la quantité Q de courant électrique, dans le premier ensemble S1, et
   - au moins une deuxième commande de déstockage de la même quantité d'énergie, correspondant à la quantité Q de courant électrique, à partir du deuxième ensemble S2.

L'unité de commande 54 peut en outre être programmée pour activer une telle transmission virtuelle d'une quantité Q de courant électrique lorsqu'au moins une ligne électrique située entre les ensembles E1 et E2 est sollicitée pour transmettre temporairement une quantité de courant électrique dépassant sa capacité maximale d'une quantité supérieure ou égale à la quantité Q, par exemple à cause d'au moins un site de production de courant électrique raccordé au réseau 10 en situation de surproduction temporaire ou à cause d'au moins un site de consommation de courant électrique raccordé au réseau 10 en situation de surconsommation temporaire. Une zone ou un site en « surproduction » est une zone ou un site présentant un excédent d'énergie qui dépasse les capacités d'évacuation des lignes électriques qui le raccordent au reste du réseau. Une zone ou un site en « surconsommation » est une zone ou un site présentant un déficit d'énergie qui dépasse les capacités d'alimentation des lignes électriques qui le raccordent au reste du réseau. En d'autres termes, la transmission virtuelle est activée en cas de congestion temporaire d'une partie du réseau 10 et est réalisée à l'aide d'une sollicitation conjointe en stockage/déstockage des ensembles S1 et S2 d'unités de stockage.

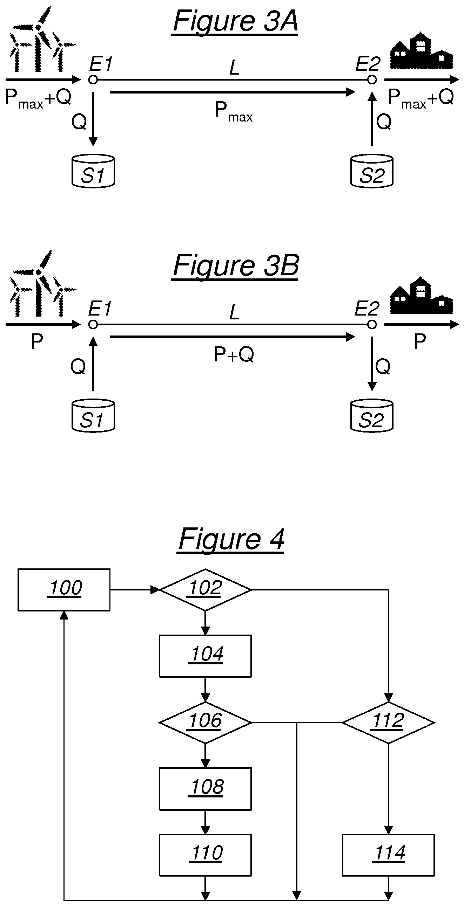

Le fonctionnement plus précis de l'unité de commande 54 programmée comme indiqué ci-dessus sera détaillé selon différents scénarios possibles en référence aux figures 3A, 3B à 9. On notera que toutes les informations provenant du réseau 10 (incluant notamment les informations de remplissage des unités de stockage 24, 30, 36, 42) et toutes les commandes de stockage/déstockage émanant de l'unité de commande 54 sont échangées entre l'unité de commande 54 du système d'optimisation 12 et les éléments concernés des postes électriques 16, 18, 20, 22 du réseau 10 (notamment les contrôleurs de conversion 28, 34, 40, 46) par l'intermédiaire du réseau de télécommunication 14.

Sachant en outre que l'installation de la figure 1 est de façon connue en soi gérée par au moins un site distant de surveillance relié à chacun des postes électriques 16, 18, 20, 22, le système d'optimisation peut être implémenté dans l'un de ces sites distants. En variante, il pourrait aussi être installé à l'intérieur de l'un des postes électriques.

La figure 2 illustre un exemple non limitatif de configuration et topologie possibles pour le réseau 10. Le poste électrique 16 est par exemple raccordé à un site de production d'électricité à l'aide d'éoliennes tandis que le poste électrique 22 est raccordé à un site de production d'électricité à l'aide de panneaux photovoltaïques. Ces deux sites sont susceptibles d'engendrer des surproductions temporaires. Les postes électriques 18 et 20 sont raccordés à des sites de consommation d'électricité, par exemple des zones urbaines. Ces zones sont susceptibles d'engendrer des surconsommations temporaires. Bien sûr, le réseau 10 est particulièrement simple et n'est produit à titre d'exemple que pour permettre une compréhension rapide de l'invention. De façon générale, un réseau de transmission de courant électrique, incluant son transport et/ou sa distribution, est beaucoup plus complexe. En particulier, il comporte des postes électriques qui ne sont directement raccordés ni à un site de production ni à un site de consommation mais à un ou plusieurs autres postes électriques.

Les figures 3A et 3B illustrent un scénario d'optimisation d'une unique ligne électrique L d'un réseau de transmission de courant électrique. Cette ligne électrique L reçoit du courant électrique à une première extrémité et en fournit à sa deuxième extrémité. Ses deux extrémités sont respectivement raccordées à deux unités de stockage. Elle est exposée à des congestions intermittentes avérées ou simulées en « N-1 », c'est-à-dire conditionnellement à une défaillance supposée d'un des ouvrages du réseau considéré, et immédiates ou anticipées en fonction de prévisions d'évolutions de sollicitations du réseau en production ou en consommation. Elle présente une capacité maximale de transmission de courant électrique notée Pₘₐₓ.

Sur la figure 3A, la ligne L est confrontée à un instant TA à une demande de transmission d'une quantité Pₘₐₓ + Q de courant électrique dépassant ainsi sa capacité maximale de la quantité Q. Conformément à l'invention, l'unité de commande 54 active donc une transmission virtuelle consistant à :
- considérer que l'ensemble E1 est constitué de l'extrémité de ligne L en amont de la transmission et que l'ensemble S1 à sélectionner est constitué de l'unité de stockage raccordée à E1,
- considérer que l'ensemble E2 est constitué de l'extrémité de ligne L en aval de la transmission et que l'ensemble S2 à sélectionner est constitué de l'unité de stockage raccordée à E2,
- vérifier que l'unité de stockage S1 peut stocker une quantité d'énergie supplémentaire correspondant à la quantité Q de courant électrique,
- vérifier que l'unité de stockage S2 dispose d'une quantité d'énergie stockée correspondant à une quantité de courant électrique supérieure ou égale à Q, puis
- adresser conjointement et respectivement aux contrôleurs de conversion gérant les deux unités de stockage S1 et S2 une première commande de stockage de la quantité d'énergie correspondant à la quantité Q de courant électrique dans l'unité de stockage S1 et une deuxième commande de déstockage de la quantité d'énergie correspondant à la quantité Q de courant électrique à partir de l'unité de stockage S2.

Cette activation se termine par l'exécution conjointe des commandes de stockage et déstockage par les contrôleurs de conversion concernés. Ces commandes sont exécutées symétriquement et en même temps pour un bilan énergétique total nul des unités de stockage S1 et S2, aux pertes de rendements énergétiques près. Ces pertes sont de préférence inférieures à 10%.

En conséquence, tout se passe comme si la quantité Pₘₐₓ + Q de courant électrique était transmise depuis l'extrémité E1 jusqu'à l'extrémité E2 alors que seule la quantité Pₘₐₓ transite réellement dans la ligne L. Ainsi la ligne réelle L de capacité Pₘₐₓ renforcée par les unités de stockage S1 et S2, rend le même service qu'une ligne de capacité Pₘₐₓ + Q en toute transparence pour le réseau de distribution. Les unités de stockage peuvent être aisément dimensionnées en capacités énergétiques et puissances pour absorber toutes les congestions temporaires auxquelles la ligne L est susceptible d'être confrontée. Néanmoins, pour des raisons économiques liées à une comparaison des coûts d'investissements en stockage et des coûts résultant de congestions résiduelles, il peut être choisi de ne dimensionner les unités de stockage que pour absorber une partie des congestions temporaires.

On notera que la longueur de la ligne L n'a aucune influence sur la capacité de transmission virtuelle liée à la présence et à l'exploitation des unités de stockage, de sorte que des transmissions virtuelles à très grandes distances peuvent être envisagées.

On notera également qu'un remplissage de référence est prédéterminé pour chacune des unités de stockage S1 et S2. Si le sens de congestion est équiprobable (ce qui n'est pas le cas des figures 3A et 3B où l'extrémité E1 est toujours productrice et l'extrémité E2 toujours consommatrice), l'état de référence est le remplissage à mi capacité des deux unités de stockage. Si la congestion se produit toujours dans le même sens de transmission, alors l'état de référence pour l'unité de stockage en amont S1 sera le niveau de charge le plus faible possible, et l'état de référence pour l'unité de stockage en aval S2 sera le niveau de charge le plus élevé possible. Pour des situations intermédiaires, l'état de référence est défini comme une fonction statistique monotone interpolant les deux cas précédents. La configuration de cette fonction est choisie de manière à obtenir la meilleure performance des stockages en simulation. Cette configuration est à la portée de l'homme du métier.

La transmission virtuelle temporaire de la figure 3A engendre un déséquilibre de stockage par rapport à l'état de référence qu'il convient de corriger en profitant de périodes de transmissions faibles.

Ainsi, à un instant TB illustré sur la figure 3B où la demande en transmission de courant électrique sur la ligne L est de valeur P inférieure à Pₘₐₓ - Q, une reconstitution de l'état de référence est opérée aux extrémités de la ligne L. Les contrôleurs de conversion des unités de stockage S1 et S2 sollicitées lors de la transmission virtuelle précédente commandent leur stockage ou déstockage d'énergie en vue d'atteindre leur remplissage de référence. Dans l'exemple illustré, tout se passe comme si la quantité P de courant électrique était transmise depuis l'extrémité E1 jusqu'à l'extrémité E2 alors que la quantité P + Q transite réellement dans la ligne L pour reconstituer l'état de référence des unités de stockage S1 et S2.

Bien sûr, cette reconstitution est exécutée de manière à ne jamais solliciter un dépassement de capacité maximale Pₘₐₓ de la ligne L. Elle peut être exécutée de manière autonome par les contrôleurs de conversion concernés ou commandée par l'unité de commande 54. Elle n'est possible que si la ligne L ne fonctionne pas toujours en limite de capacité.

Pour traiter ce scénario conforme aux figures 3A et 3B, l'unité de commande 54 et éventuellement les contrôleurs de conversion de l'installation peuvent être programmés pour exécuter en boucles les étapes successives du procédé illustré sur la figure 4.

Au cours d'une étape 100, le système d'optimisation 12 reçoit différentes données de télésignalisation ou télémesure provenant du réseau 10, plus précisément des postes électriques, ou d'un site distant de surveillance. Ces données comportent notamment les informations de remplissage de chacune des unités de stockage fournies par les contrôleurs de conversion et d'éventuelles informations de congestions réelles ou simulées, imminentes ou à venir. Cela permet notamment à l'unité de commande 54 de mettre à jour les données de la première zone de stockage 56.

L'étape 100 est suivie d'un premier test 102 au cours duquel l'unité de commande 54 détermine si l'une des lignes du réseau 10, notée L, est en situation de congestion potentielle.

Si oui, le test 102 est suivi d'une étape 104 de sélection :
- d'une unité de stockage S1 raccordée à l'extrémité E1 de la ligne L située en amont de la congestion potentielle, et
- d'une unité de stockage S2 raccordée à l'extrémité E2 de la ligne L située en aval de la congestion potentielle.

Le procédé passe alors à un deuxième test 106 au cours duquel les informations de remplissage des unités de stockage sélectionnées à l'étape 104 sont analysées par l'unité de commande 54 pour déterminer si les stockage et déstockage souhaités pour absorber la congestion potentielle sont réalisables. En d'autres termes, les marges de manoeuvres sont-elles suffisantes dans les unités de stockage S1 et S2 pour réaliser la transmission virtuelle d'une quantité Q de courant électrique par la ligne L en surcharge ?

Si oui, le test 106 est suivi d'une étape 108 d'activation de cette transmission virtuelle depuis l'extrémité E1 vers l'extrémité E2 en adressant conjointement aux contrôleurs de conversion concernés :
- une première commande de stockage d'une quantité d'énergie, correspondant à la quantité Q de courant électrique, dans l'unité de stockage S1, et
- une deuxième commande de déstockage de la même quantité d'énergie, correspondant à la quantité Q de courant électrique, à partir de l'unité de stockage S2.

Ensuite, les commandes sont exécutées parallèlement par les contrôleurs de conversion concernés lors d'une étape 110, puis le procédé retourne à l'étape 100.

Si aucune congestion n'est détectée à l'étape de test 102, le procédé passe à un troisième test 112 au cours duquel l'unité de commande 54 détermine si une reconstitution de l'état de référence d'au moins une partie des unités de stockage du réseau 10 est nécessaire, notamment suite à une transmission virtuelle réalisée antérieurement.

Si oui, le test 112 est suivi d'une étape 114 au cours de laquelle les contrôleurs de conversion des unités de stockage concernées par cette reconstitution commandent leur stockage ou déstockage d'énergie en vue d'atteindre leur remplissage de référence, ceci étant effectué dans la limite de capacité maximale de transmission de courant électrique de la ou des lignes électriques sollicitées pour la reconstitution. L'étape de reconstitution 114 se poursuit jusqu'à obtention des remplissages de référence ou jusqu'à ce que la reconstitution ne soit plus possible, par exemple à cause d'une nouvelle congestion. Elle est suivie par un retour à l'étape 100.

Enfin, si une transmission virtuelle n'est pas considérée possible lors du test 106 ou si une reconstitution n'est pas détectée comme nécessaire lors du test 112, le procédé retourne également à l'étape 100.

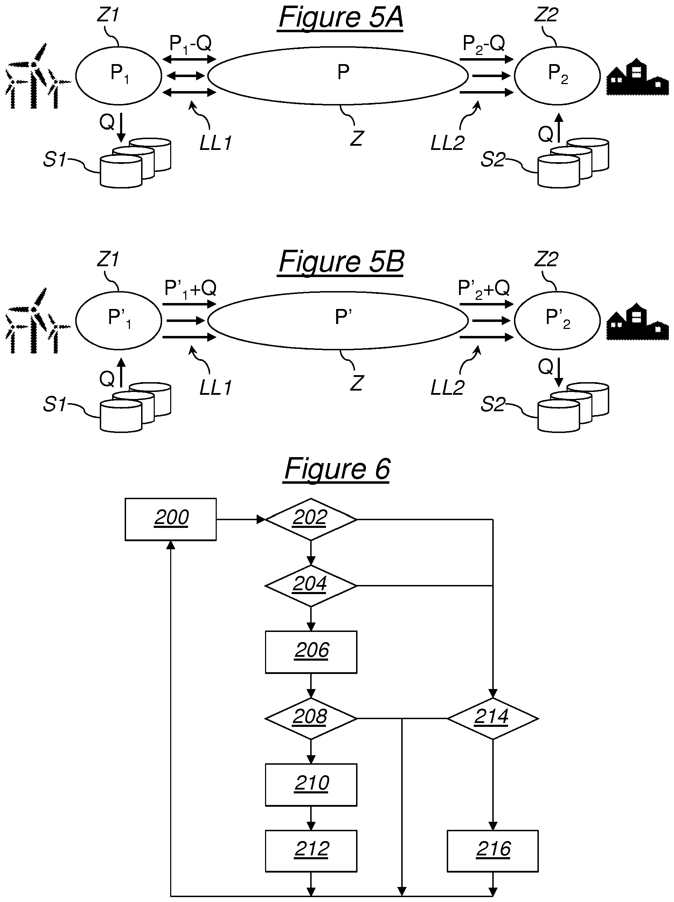

Les figures 5A et 5B illustrent un scénario d'optimisation de portions d'un réseau de transmission de courant électrique pouvant impliquer simultanément plusieurs lignes proches et distantes. Il s'agit d'une généralisation du scénario des figures 3A et 3B. Une première zone Z1 est par exemple productrice de courant électrique et exposée à des surproductions temporaires. Une deuxième zone Z2 est par exemple consommatrice de courant électrique et exposée à des surconsommations temporaires. Une zone intermédiaire Z, par laquelle les deux zones Z1 et Z2 sont reliées, comporte ses propres raccordements à des sites de production et/ou de consommation et est supposée en équilibre. Des lignes électriques LL1 de capacité globale maximale P_{1,max} permettent de relier la première zone Z1 à la zone intermédiaire Z. Elles sont exposées à des congestions temporaires en raison des surproductions potentielles de la première zone Z1. Des lignes électriques LL2 de capacité globale maximale P_{2,max} permettent de relier la deuxième zone Z2 à la zone intermédiaire Z. Elles sont exposées à des congestions temporaires en raison des surconsommations potentielles de la deuxième zone Z2. Comme précédemment, ces congestions temporaires peuvent être avérées ou simulées, immédiates ou anticipées. La zone Z1 comporte un premier ensemble S1 d'unités de stockage raccordées à un premier ensemble E1 d'extrémités de lignes (qui peuvent être soit les extrémités de lignes LL1 raccordées à la première zone Z1, soit d'autres extrémités de lignes de la première zone Z1). La zone Z2 comporte un deuxième ensemble S2 d'unités de stockage raccordées à un deuxième ensemble E2 d'extrémités de lignes (qui peuvent être soit les extrémités de lignes LL2 raccordées à la deuxième zone Z2, soit d'autres extrémités de lignes de la deuxième zone Z2).

Sur la figure 5A, le réseau de transmission de courant électrique est confronté à un instant TA à une congestion potentielle :
- soit parce que la zone Z1 est en surproduction P₁ = P_{1,max} + Q, indépendamment de l'état de la zone Z2,
- soit parce que la zone Z2 est en surconsommation P₂ = P_{2,max} + Q, indépendamment de l'état de la zone Z1,
- soit pour les deux raisons précédentes simultanément, et dans ce cas on notera Q la plus grande des deux congestions.

Conformément à l'invention, l'unité de commande 54 active donc une transmission virtuelle consistant à :
- sélectionner l'ensemble S1 d'unités de stockage de la zone Z1,
- sélectionner l'ensemble S2 d'unités de stockage de la zone Z2,
- vérifier que les unités de stockage de l'ensemble S1 peuvent globalement stocker une quantité d'énergie supplémentaire correspondant à la quantité Q de courant électrique souhaitée,
- vérifier que les unités de stockage de l'ensemble S2 disposent globalement d'une quantité d'énergie stockée correspondant à une quantité de courant électrique supérieure ou égale à Q, puis
- si seule la zone Z1 est en surproduction, vérifier que le déstockage nécessaire dans l'ensemble S2 pour la neutralité énergétique ne viendrait pas congestionner la zone Z2,
- si seule la zone Z2 est en surconsommation, vérifier que le stockage nécessaire dans l'ensemble S1 pour la neutralité énergétique ne viendrait pas congestionner la zone Z1,
- adresser conjointement et respectivement aux contrôleurs de conversion gérant les deux ensembles S1 et S2 d'unités de stockage au moins une première commande de stockage de la quantité d'énergie correspondant à la quantité Q de courant électrique dans l'ensemble S1 et au moins une deuxième commande de déstockage de la quantité d'énergie correspondant à la quantité Q de courant électrique à partir de l'ensemble S2.

Cette activation se termine par l'exécution conjointe des commandes de stockage et déstockage par les contrôleurs de conversion concernés.

En conséquence, tout se passe comme si la quantité P₁ de courant électrique était transmise de la zone Z1 à la zone Z et la quantité P₂ de la zone Z à la zone Z2 alors que seules les quantités P₁ - Q et P₂ - Q transitent réellement respectivement dans les lignes LL1 et LL2. Les unités de stockage des ensembles S1 et S2 peuvent être aisément dimensionnées en capacités énergétiques et puissances pour absorber tout ou partie (selon les raisons économiques précitées) des congestions temporaires auxquelles les lignes LL1 et LL2 sont susceptibles d'être confrontées. On remarquera que dans le cas où la production P₁ est inférieure à Q, une partie de la production P de la zone intermédiaire Z peut être dirigée vers l'ensemble S1.

Comme précédemment, des remplissages de référence sont avantageusement prédéterminés pour toutes les unités de stockage des ensembles S1 et S2. L'état de référence général est défini de manière à obtenir la meilleure performance des stockages en simulation selon une connaissance statistique a priori des congestions. Une telle configuration est de nouveau à la portée de l'homme du métier.

La transmission virtuelle temporaire de la figure 5A engendre un déséquilibre de stockage par rapport à l'état de référence qu'il convient de corriger en profitant de périodes de transmissions faibles.

Ainsi, à un instant TB illustré sur la figure 5B où les demandes en transmission de courant électrique sur les lignes LL1 et LL2 sont de valeurs P'₁ et P'₂ respectivement inférieures à P_{1,max} - Q et P_{2,max} - Q, une reconstitution de l'état de référence général est opérée aux extrémités des ensembles E1 et E2. Les contrôleurs de conversion des ensembles S1 et S2 d'unités de stockage sollicitées lors de la transmission virtuelle précédente commandent leurs stockages ou déstockages d'énergie en vue d'atteindre les remplissages de référence. Dans l'exemple illustré, tout se passe comme si les quantités P'₁ et P'₂ de courant électrique étaient respectivement transmises de la zone Z1 à la zone Z et de la zone Z à la zone Z2 alors que la quantité P'₁ + Q transite réellement dans les lignes LL1 et la quantité P'₂ + Q dans les lignes LL2 pour reconstituer l'état de référence des unités de stockage des ensembles S1 et S2.

Bien sûr, cette reconstitution est exécutée de manière à ne jamais solliciter de dépassement des capacités maximales P_{1,max} et P_{2,max} des lignes LL1 et LL2. Elle peut être exécutée de manière autonome par les contrôleurs de conversion concernés ou commandée par l'unité de commande 54. Elle n'est possible que si les lignes LL1 et LL2 ne fonctionnent pas toujours en limite de capacité.

Pour traiter ce scénario conforme aux figures 5A et 5B, l'unité de commande 54 et éventuellement les contrôleurs de conversion de l'installation peuvent être programmés pour exécuter en boucles les étapes successives du procédé illustré sur la figure 6.

Au cours d'une étape 200, le système d'optimisation 12 reçoit différentes données de télésignalisation ou télémesure provenant du réseau 10, plus précisément des postes électriques, ou d'un site distant de surveillance. Ces données comportent notamment les informations de remplissage de chacune des unités de stockage fournies par les contrôleurs de conversion et d'éventuelles informations de congestions réelles ou simulées, imminentes ou à venir. Cela permet notamment à l'unité de commande 54 de mettre à jour les données de la première zone de stockage 56.

L'étape 200 est suivie d'un premier test 202 au cours duquel l'unité de commande 54 détermine si au moins l'une des zones du réseau 10 est affectée par une situation de congestion potentielle.

Si oui, le test 202 est suivi d'un deuxième test 204 au cours duquel l'unité de commande 54 détermine si un transit virtuel peut améliorer la situation de la zone affectée sans en mettre une autre en situation critique.

Si oui, le test 204 est suivi d'une étape 206 de sélection :
- d'un ensemble S1 d'unités de stockage raccordées à un ensemble E1 d'extrémités de lignes situées en amont de la congestion potentielle, et
- d'un ensemble S2 d'unités de stockage raccordées à un ensemble E2 d'extrémités de lignes situées en aval de la congestion potentielle.

Le procédé passe alors à un troisième test 208 au cours duquel les informations de remplissage des unités de stockage sélectionnées à l'étape 206 sont analysées par l'unité de commande 54 pour déterminer si les stockages et déstockages souhaités pour absorber la congestion potentielle sont réalisables. En d'autres termes, les marges de manoeuvres sont-elles suffisantes dans les unités de stockage des ensembles S1 et S2 pour réaliser la transmission virtuelle d'une quantité Q de courant électrique par la zone en surcharge ?

Si oui, le test 208 est suivi d'une étape 210 d'activation de cette transmission virtuelle depuis l'ensemble E1 vers l'ensemble E2 en adressant conjointement aux contrôleurs de conversion concernés :
- au moins une première commande de stockage d'une quantité d'énergie, correspondant à la quantité Q de courant électrique, dans les unités de stockage de l'ensemble S1, et
- au moins une deuxième commande de déstockage de la même quantité d'énergie, correspondant à la quantité Q de courant électrique, à partir des unités de stockage de l'ensemble S2.

Ensuite, les commandes sont exécutées parallèlement par les contrôleurs de conversion concernés lors d'une étape 212, puis le procédé retourne à l'étape 200.

Si aucune congestion n'est détectée à l'étape de test 202, le procédé passe à un quatrième test 214 au cours duquel l'unité de commande 54 détermine si une reconstitution de l'état de référence d'au moins une partie des unités de stockage du réseau 10 est nécessaire, notamment suite à une transmission virtuelle réalisée antérieurement.

Si oui, le test 214 est suivi d'une étape 216 au cours de laquelle les contrôleurs de conversion des unités de stockage concernées par cette reconstitution commandent leur stockage ou déstockage d'énergie en vue d'atteindre leur remplissage de référence, ceci étant effectué dans la limite de capacité maximale de transmission de courant électrique des lignes électriques sollicitées pour la reconstitution. L'étape de reconstitution 216 se poursuit jusqu'à obtention des remplissages de référence ou jusqu'à ce que la reconstitution ne soit plus possible, par exemple à cause d'une nouvelle congestion. Elle est suivie par un retour à l'étape 200.

Enfin, si une transmission virtuelle n'est pas considérée possible lors du test 208 ou si une reconstitution n'est pas détectée comme nécessaire lors du test 214, le procédé retourne également à l'étape 200.

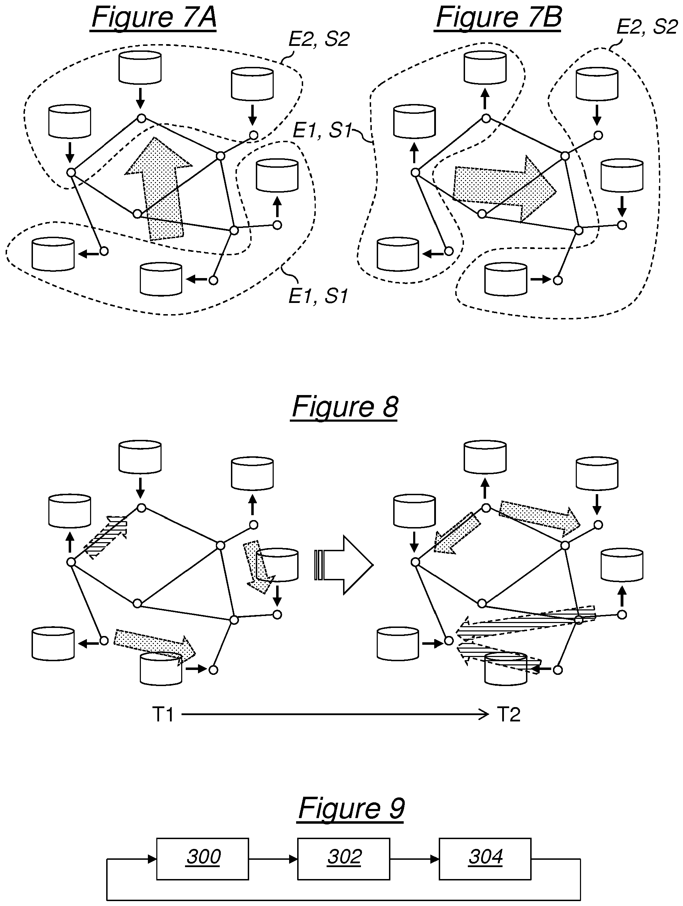

Les figures 7A et 7B illustrent deux autres scénarios de transmissions virtuelles pouvant être traités par exécution du procédé de la figure 6. Selon ces scénarios, un réseau quelconque de transmission de courant électrique peut être affecté par des congestions intermittentes variables, notamment selon des directions principales de transmissions variables. Ce réseau est alors pourvu de multiples unités de stockages distribuées en un grand nombre de ses noeuds, notamment aux endroits précis où les congestions sont les plus probables. En fonction du sens principal d'une congestion, qui peut être déterminé à l'étape 202, l'unité de commande 54 sélectionne les meilleurs ensembles E1, S1 et E2, S2 possibles à l'étape 206 pour orienter la transmission virtuelle souhaitée dans la bonne direction principale illustrée par la flèche texturée en pointillés, c'est-à-dire dans le sens de la congestion. Dans le cas de la figure 7A, c'est par exemple une transmission virtuelle de Sud à Nord qui est souhaitée. Dans le cas de la figure 7B, c'est par exemple une transmission virtuelle d'Ouest en Est qui est souhaitée. En exécutant en boucle le procédé de la figure 6, il est par ailleurs possible de modifier la direction principale de la transmission virtuelle à tout moment, sur simple commande, en changeant simplement la composition des ensembles E1, S1 et E2, S2. On peut ainsi orienter la transmission virtuelle comme une girouette, au gré des besoins du réseau.

La figure 8 illustre un autre scénario de transmissions virtuelles et reconstitutions pouvant s'exécuter en même temps et évoluer dans le temps indépendamment les unes des autres, sans nécessairement présenter de directions principales. On notera également que les ensembles E1 et E2 ne forment pas nécessairement non plus des figures géométriques connexes à cause de la complexité de la répartition des congestions à traiter. Ce scénario représente ainsi une généralisation des scénarios précédents. Comme précédemment, on multiplie les unités de stockage aux points les plus sensibles du réseau pour faire face à tout ou partie (selon les raisons économiques précitées) des situations de congestions possibles. A un instant T1, deux transmissions virtuelles (représentées par deux flèches texturées en pointillés) conformes au scénario de la figure 3A sont par exemple exécutées tandis qu'une reconstitution (représentée par une flèche texturée en hachures horizontales) conforme au scénario de la figure 3B est également exécutée. La situation évolue ensuite de sorte qu'à un instant T2, deux autres transmissions virtuelles (représentées par deux flèches texturées en pointillés) conformes au scénario de la figure 3A sont exécutées tandis que deux autres reconstitutions (représentées par deux flèches texturées en hachures horizontales) conformes au scénario de la figure 3B sont également exécutées. On remarquera notamment qu'une unité de stockage sollicitée pour une transmission virtuelle à l'instant T1 peut être au moins partiellement reconstituée par une autre transmission virtuelle à l'instant T2. De même, à un instant donné, une même unité de stockage peut être sollicitée en transmission virtuelle et reconstitution, l'une pouvant même incidemment au moins partiellement compenser l'autre.

Un procédé général d'optimisation tel que celui illustré en figure 9, s'exécutant en surcouche d'au moins l'un quelconque des procédés des figures 4 et 6, permet de traiter ce scénario plus complexe. Ce procédé général peut lui aussi être exécuté par l'unité de commande 54 et éventuellement les contrôleurs de conversion de l'installation.

Au cours d'une première étape 300, le système d'optimisation 12 reçoit différentes données de télésignalisation ou télémesure provenant du réseau 10, plus précisément des postes électriques, ou d'un site distant de surveillance. Ces données comportent notamment les informations de remplissage de chacune des unités de stockage fournies par les contrôleurs de conversion et d'éventuelles informations de congestions réelles ou simulées, imminentes ou à venir. Cela permet notamment à l'unité de commande 54 de mettre à jour les données de la première zone de stockage 56. Dans cette étape peuvent être incluses les étapes 100 et 200 des deux procédés précédemment décrits.

Au cours d'une étape suivante 302, un programme d'ordinateur implémentant une méthode d'optimisation sous contraintes est exécuté, intégrant tous les besoins en transmissions virtuelles et reconstitutions du réseau à un instant T et les prévisions des besoins aux instants futurs. Un tel programme d'optimisation est par exemple une adaptation d'un programme d'optimisation mathématique connu, de type « Optimal Power Flow », tel qu'implémenté dans le logiciel Eurostag (marque déposée) distribué par la société TRACTEBEL Engineering. Dans cette étape 302, voire dans le programme d'optimisation, peuvent être incluses les étapes 102, 104, 106, 108 et 112 ou 202, 204, 206, 208, 210 et 214 des deux procédés précédemment décrits, mais le programme d'optimisation peut aussi être adapté d'une autre façon pour inclure les principes généraux de l'invention.

Enfin, au cours d'une étape 304, les consignes et commandes établies à l'étape précédente sont exécutées, incluant en particulier les commandes de stockages et déstockages intervenant dans les opérations de transmissions virtuelles et reconstitutions décidées : par exemple les étapes 110 et 114 du procédé de la figure 4, ou les étapes 212 et 216 du procédé de la figure 6. Le procédé général d'optimisation retourne ensuite à l'étape 300 en fin de période courante

Il apparaît clairement qu'une installation telle que celle décrite précédemment, mettant en oeuvre l'un des procédés décrits précédemment, permet d'augmenter de façon sporadique et transparente les capacités de transmission des lignes électriques d'un réseau de transmission de courant électrique sans avoir besoin de le redimensionner ni de le renforcer.

On notera par ailleurs que l'invention n'est pas limitée aux modes de réalisation décrits précédemment.

En particulier, l'usage décrit précédemment des unités de stockage pour des transmissions virtuelles de courant électrique à bilan énergétique total nul ne s'oppose pas à un usage supplémentaire classique de mouvement net de stockage ou déstockage de ces unités. Ces deux processus de stockage ou déstockage peuvent se superposer, le premier consistant à créer une transmission virtuelle s'effectuant à bilan énergétique nul et le deuxième un stockage ou déstockage net. Il convient juste de prévoir ces deux utilisations pour dimensionner les unités de stockage en conséquence. Notamment, la capacité en puissance des unités de stockage doit être cohérente avec la puissance maximale de transmission virtuelle envisageable et leur capacité en énergie doit être cohérente avec la durée maximale envisageable d'une transmission virtuelle.

## Revendications

1. Procédé d'optimisation du fonctionnement d'un réseau (10) de transmission de courant électrique, le réseau comportant au moins une ligne électrique (L1, L2, L3, L4, L5), une pluralité d'unités (24, 30, 36, 42) de stockage d'énergie raccordées à une pluralité des extrémités de ladite au moins une ligne électrique et des contrôleurs (28, 34, 40, 46) de conversion d'énergie stockée en courant électrique et réciproquement entre chaque unité de stockage et la ou les extrémité(s) de ligne(s) à laquelle ou auxquelles elle est raccordée, le procédé d'optimisation comportant les étapes suivantes :
- maintien à jour (100 ; 200 ; 300) en mémoire (56) d'informations de remplissage de chacune des unités de stockage (24, 30, 36, 42) fournies par les contrôleurs de conversion (28, 34, 40, 46),
- commande (108 ; 210 ; 302) des contrôleurs de conversion (28, 34, 40, 46), par l'envoi de commandes de stockage ou déstockage d'énergie dans ou à partir des unités de stockage (24, 30, 36, 42),
le procédé comportant en outre les étapes suivantes :
- sélection (104 ; 206) d'un premier ensemble S1 d'au moins une unité de stockage raccordée à un premier ensemble E1 d'au moins une extrémité de ligne,
- sélection (104 ; 206) d'un deuxième ensemble S2 d'au moins une unité de stockage raccordée à un deuxième ensemble E2 d'au moins une extrémité de ligne,
- en fonction (106 ; 208) des informations de remplissage maintenues à jour en mémoire (56), activation (108 ; 210 ; 302) d'une transmission virtuelle d'une quantité Q de courant électrique depuis le premier ensemble E1 vers le deuxième ensemble E2 en adressant conjointement aux contrôleurs de conversion concernés :
• au moins une première commande de stockage d'une quantité d'énergie, correspondant à la quantité Q de courant électrique, dans le premier ensemble S1, et
• au moins une deuxième commande de déstockage de la même quantité d'énergie, correspondant à la quantité Q de courant électrique, à partir du deuxième ensemble S2, et
- exécution conjointe (110 ; 212 ; 304) des commandes de stockage et déstockage par les contrôleurs de conversion concernés,
**caractérisé en ce qu'**un remplissage de référence est prédéterminé pour chacune des unités de stockage (24, 30, 36, 42), le procédé comportant en outre, suite à l'étape d'activation (108 ; 210 ; 302) de la transmission virtuelle, une étape de reconstitution (114 ; 216 ; 302) selon laquelle les contrôleurs de conversion des unités de stockage sollicitées lors de la transmission virtuelle commandent leur stockage ou déstockage d'énergie en vue d'atteindre leur remplissage de référence,
et **en ce que** le remplissage de référence est prédéterminé pour chacune des unités de stockage (24, 30, 36, 42) au moins selon les règles suivantes :
- si le sens de congestion est équiprobable, alors le remplissage de référence est le remplissage à mi capacité de chaque unité de stockage concernée,
- si la congestion se produit toujours dans le même sens de transmission, alors le remplissage de référence pour chaque unité de stockage située en amont sera le niveau de charge le plus faible possible et le remplissage de référence pour chaque unité de stockage située en aval sera le niveau de charge le plus élevé possible, et
- pour toute situation intermédiaire, le remplissage de référence est défini comme une fonction monotone interpolant les deux règles précédentes.

2. Procédé d'optimisation selon la revendication 1, dans lequel les commandes de stockage et déstockage adressées lors de l'activation (108 ; 210 ; 302) de la transmission virtuelle de la quantité Q de courant électrique sont exécutées par les contrôleurs de conversion concernés pour un bilan énergétique total nul des unités de stockage des ensembles S1 et S2, aux pertes de rendements énergétiques près.

3. Procédé d'optimisation selon la revendication 1, dans lequel l'étape de reconstitution (114 ; 216 ; 302) est exécutée de manière à ne jamais solliciter un dépassement de capacité maximale de transmission de courant électrique de ladite au moins une ligne électrique (L1, L2, L3, L4, L5).

4. Procédé d'optimisation selon l'une quelconque des revendications 1 a 3, dans lequel, chaque ligne électrique (L1, L2, L3, L4, L5) présentant une capacité maximale de transmission de courant électrique, la transmission virtuelle de la quantité Q de courant électrique est activée (108 ; 210 ; 302) lorsqu'au moins une ligne électrique située entre les ensembles E1 et E2 est sollicitée (102 ; 202) pour transmettre temporairement une quantité de courant électrique dépassant sa capacité maximale d'une quantité supérieure ou égale à la quantité Q.

5. Procédé d'optimisation selon l'une quelconque des revendications 1 à 4, dans lequel :
- un sens principal de congestion d'au moins une ligne électrique dans le réseau est déterminé (202), et
- les sélections (206) des premier et deuxième ensembles S1, S2 sont réalisées pour orienter la transmission virtuelle dans ce sens principal de congestion.

6. Système (12) d'optimisation du fonctionnement d'un réseau (10) de transmission de courant électrique, le réseau comportant au moins une ligne électrique (L1, L2, L3, L4, L5), une pluralité d'unités (24, 30, 36, 42) de stockage d'énergie raccordées à une pluralité des extrémités de ladite au moins une ligne électrique et des contrôleurs (28, 34, 40, 46) de conversion d'énergie stockée en courant électrique et réciproquement entre chaque unité de stockage et la ou les extrémité(s) de ligne(s) à laquelle ou auxquelles elle est raccordée, le système d'optimisation (12) comportant :
- une mémoire (56) maintenant à jour des informations de remplissage de chacune des unités de stockage (24, 30, 36, 42),
- une unité de commande (54), connectée en lecture/écriture à la mémoire (56) et échangeant avec les contrôleurs de conversion (28, 34, 40, 46), programmée (58) pour adresser des commandes de stockage ou déstockage d'énergie dans ou à partir des unités de stockage (24, 30, 36, 42),
dans lequel l'unité de commande (54) est en outre programmée (58) pour :
- sélectionner un premier ensemble S1 d'au moins une unité de stockage raccordée à un premier ensemble E1 d'au moins une extrémité de ligne,
- sélectionner un deuxième ensemble S2 d'au moins une unité de stockage raccordée à un deuxième ensemble E2 d'au moins une extrémité de ligne,
- en fonction des informations de remplissage maintenues à jour en mémoire (56), activer une transmission virtuelle d'une quantité Q de courant électrique depuis le premier ensemble E1 vers le deuxième ensemble E2 en adressant conjointement aux contrôleurs de conversion concernés :
• au moins une première commande de stockage d'une quantité d'énergie, correspondant à la quantité Q de courant électrique, dans le premier ensemble S1, et
• au moins une deuxième commande de déstockage de la même quantité d'énergie, correspondant à la quantité Q de courant électrique, à partir du deuxième ensemble S2,
**caractérisé en ce que** l'unité de commande (54) est programmée pour exécuter les étapes suivantes :
un remplissage de référence est prédéterminé pour chacune des unités de stockage (24, 30, 36, 42),
suite à l'étape d'activation (108 ; 210 ; 302) de la transmission virtuelle, une étape de reconstitution (114 ; 216 ; 302) selon laquelle les contrôleurs de conversion des unités de stockage sollicitées lors de la transmission virtuelle commandent leur stockage ou déstockage d'énergie en vue d'atteindre leur remplissage de référence,
le remplissage de référence est prédéterminé pour chacune des unités de stockage (24, 30, 36, 42) au moins selon les règles suivantes :
- si le sens de congestion est équiprobable, alors le remplissage de référence est le remplissage à mi capacité de chaque unité de stockage concernée,
- si la congestion se produit toujours dans le même sens de transmission, alors le remplissage de référence pour chaque unité de stockage située en amont sera le niveau de charge le plus faible possible et le remplissage de référence pour chaque unité de stockage située en aval sera le niveau de charge le plus élevé possible, et
- pour toute situation intermédiaire, le remplissage de référence est défini comme une fonction monotone interpolant les deux règles précédentes.

7. Installation de transmission optimisée de courant électrique comportant :
- un réseau (10) de transmission de courant électrique comportant :
• au moins une ligne électrique (L1, L2, L3, L4, L5),
• une pluralité d'unités (24, 30, 36, 42) de stockage d'énergie raccordées à une pluralité des extrémités de ladite au moins une ligne électrique, et
• des contrôleurs (28, 34, 40, 46) de conversion d'énergie stockée en courant électrique ou réciproquement entre chaque unité de stockage et la ou les extrémité(s) de ligne(s) à laquelle ou auxquelles elle est raccordée,
- un système d'optimisation (12) selon la revendication 6, et
- un réseau de télécommunication (14) pour un échange des informations de remplissage et des commandes de stockage/déstockage entre l'unité de commande (54) du système d'optimisation (12) et les contrôleurs de conversion (28, 34, 40, 46) du réseau (10) de transmission de courant électrique.

8. Installation selon la revendication 7, dans laquelle les unités de stockage (24, 30, 36, 42) sont disposées à l'intérieur de postes électriques (16, 18, 20, 22) de raccordement de lignes électriques (L1, L2, L3, L4, L5) du réseau (10) de transmission de courant électrique.

## Patentansprüche

1. Verfahren zum Optimieren des Betriebs eines elektrischen Stromübertragungsnetzes (10), wobei das Netz mindestens eine elektrische Leitung (L1, L2, L3, L4, L5), eine Vielzahl von Energiespeichereinheiten (24, 30, 36, 42), die an eine Vielzahl der Enden der mindestens einen elektrischen Leitung angeschlossen sind, und Steuereinheiten (28, 34, 40, 46) zum Umwandeln von gespeicherter Energie in elektrischen Strom und umgekehrt, zwischen jeder Speichereinheit und dem oder den Leitungsende (n), an das oder die sie angeschlossen ist, beinhaltet, wobei das Verfahren zum Optimieren die folgenden Schritte beinhaltet:
- aktuell Halten (100; 200; 300) im Speicher (56) von Füllinformationen über jede der Speichereinheiten (24, 30, 36, 42), die von den Steuereinheiten zum Umwandeln (28, 34, 40, 46) bereitgestellt werden,
- Steuern (108; 210; 302) der Steuereinheiten zum Umwandeln (28, 34, 40, 46) durch das Senden von Befehlen zum Speichern oder Auslagern von Energie in oder aus den Speichereinheiten (24, 30, 36, 42),
wobei das Verfahren weiter die folgenden Schritte beinhaltet:
- Auswählen (104; 206) einer ersten Reihe S1 von mindestens einer Speichereinheit, die an eine erste Reihe E1 von mindestens einem Leitungsende angeschlossen ist,
- Auswählen (104; 206) einer zweiten Reihe S2 von mindestens einer Speichereinheit, die an eine zweite Reihe E2 von mindestens einem Leitungsende angeschlossen ist,
- in Abhängigkeit (106; 208) von den im Speicher (56) aktuell gehaltenen Füllinformationen Aktivieren (108; 210; 302) einer virtuellen Übertragung einer Menge Q an elektrischem Strom aus der ersten Reihe E1 zur zweiten Reihe E2 durch gemeinsames Adressieren an den betroffenen Steuereinheiten zum Umwandeln:
• mindestens eines ersten Befehls zum Speichern einer Menge an Energie, die der Menge Q an elektrischem Strom entspricht, in der ersten Reihe S1, und
• mindestens eines zweiten Befehls zum Auslagern derselben Menge an Energie, die der Menge Q an elektrischem Strom entspricht, aus der zweiten Reihe S2, und
- gemeinsame Ausführung (110; 212; 304) der Befehle zum Speichern und Auslagern durch die betroffenen Steuereinheiten zum Umwandeln,
**dadurch gekennzeichnet, dass** eine Referenzfüllung für jede der Speichereinheiten (24, 30, 36, 42) vorbestimmt ist, wobei das Verfahren weiter nach dem Schritt des Aktivierens (108; 210; 302) der virtuellen Übertragung einen Schritt zum Wiederherstellen (114; 216; 302) beinhaltet, gemäß dem die Steuereinheiten zum Umwandeln der bei der virtuellen Übertragung angeforderten Speichereinheiten deren Speicherung oder Auslagerung von Energie befehlen, um deren Referenzfüllung zu erreichen,
und dadurch, dass die Referenzfüllung für jede der Speichereinheiten (24, 30, 36, 42) mindestens nach den folgenden Regeln vorbestimmt ist:
- wenn die Überlastungsrichtung gleichwahrscheinlich ist, ist die Referenzfüllung somit die Füllung auf halber Kapazität einer jeden betroffenen Speichereinheit,
- wenn die Überlastung immer in der gleichen Übertragungsrichtung erfolgt, ist die Referenzfüllung für jede Speichereinheit, die sich stromaufwärts befindet, die geringstmögliche Ladestufe, und die Referenzfüllung jede Speichereinheit, die sich stromabwärts befindet, die höchstmögliche Ladestufe, und
- für jede Zwischenlage wird die Referenzfüllung als monotone Funktion definiert, welche die beiden vorstehenden Regeln interpoliert.

2. Verfahren zum Optimieren nach Anspruch 1, wobei die Befehle zum Speichern und Auslagern, die bei der Aktivierung (108; 210, 302) der virtuellen Übertragung der Menge Q an elektrischem Strom adressiert werden, durch die betroffenen Steuereinheiten zum Umwandeln für eine Gesamtenergiebilanz gleich null der Speichereinheiten der Reihen S1 und S2, auf die Ertragsschmälerungen genau, ausgeführt werden.

3. Verfahren zum Optimieren nach Anspruch 1, wobei der Schritt zum Wiederherstellen (114; 216; 302) derart ausgeführt wird, um niemals eine Überschreitung der maximalen Übertragungskapazität an elektrischem Strom der mindestens einen elektrischen Leitung (L1, L2, L3, L4, L5) anzufordern.

4. Verfahren zum Optimieren nach einem der Ansprüche 1 bis 3, wobei, da jede elektrische Leitung (L1, L2, L3, L4, L5) eine maximale Übertragungskapazität an elektrischem Strom aufweist, die virtuelle Übertragung der Menge Q an elektrischem Strom aktiviert (108; 210; 302) wird, wenn mindestens eine elektrische Leitung, die sich zwischen den Reihen E1 und E2 befindet, angefordert (102; 302) wird, um vorübergehend eine Menge an elektrischem Strom zu übertragen, die ihre maximale Kapazität um eine Menge größer oder gleich der Menge Q überschreitet.

5. Verfahren zum Optimieren nach einem der Ansprüche 1 bis 4, wobei:
- eine Hauptüberlastungsrichtung mindestens einer elektrischen Leitung im Netz bestimmt (202) wird, und
- die Auswahlen (206) der ersten und zweiten Reihe S1, S2 ausgeführt werden, um die virtuelle Übertragung in diese Hauptüberlastungsrichtung zu orientieren.

6. System (12) zum Optimieren des Betriebs eines elektrischen Stromübertragungsnetzes (10), wobei das Netz mindestens eine elektrische Leitung (L1, L2, L3, L4, L5), eine Vielzahl von Energiespeichereinheiten (24, 30, 36, 42), die an eine Vielzahl der Enden der mindestens einen elektrischen Leitung angeschlossen sind, und Steuereinheiten (28, 34, 40, 46) zum Umwandeln von gespeicherter Energie in elektrischen Strom und umgekehrt, zwischen jeder Speichereinheit und dem oder den Leitungsende (n), an das oder die sie angeschlossen ist, beinhaltet, wobei das System zum Optimieren (12) beinhaltet:
- einen Speicher (56), der Füllinformationen einer jeden der Speichereinheiten (24, 30, 36, 42) aktuell hält,
- eine Steuereinheit (54), die zum Lesen/Schreiben mit dem Speicher (56) verbunden ist, und sich mit den Steuereinheiten zum Umwandeln (28, 34, 40, 46) austauscht, die programmiert (58) ist, um Befehle zum Speichern oder Auslagern von Energie in oder aus den Speichereinheiten (24, 30, 36, 42) zu adressieren,
wobei die Steuereinheit (54) weiter programmiert (58) ist, um:
- eine erste Reihe S1 von mindestens einer Speichereinheit, die an eine erste Reihe E1 von mindestens einem Leitungsende angeschlossen ist, auszuwählen,
- eine zweite Reihe S2 von mindestens einer Speichereinheit, die an eine zweite Reihe E2 von mindestens einem Leitungsende angeschlossen ist, auszuwählen,
- in Abhängigkeit von den im Speicher (56) aktuell gehaltenen Füllinformationen eine virtuelle Übertragung einer Menge Q an elektrischem Strom aus der ersten Reihe E1 zur zweiten Reihe E2 durch gemeinsames Adressieren an die betroffenen Steuereinheiten zum Umwandeln zu aktivieren:
• mindestens eines ersten Befehls zum Speichern einer Menge an Energie, die der Menge Q an elektrischem Strom entspricht, in der ersten Reihe S1, und
• mindestens eines zweiten Befehls zum Auslagern derselben Menge an Energie, die der Menge Q an elektrischem Strom entspricht, aus der zweiten Reihe S2,
**dadurch gekennzeichnet, dass** die Steuereinheit (54) programmiert ist, um die folgenden Schritte auszuführen:
eine Referenzfüllung wird für jede der Speichereinheiten (24, 30, 36, 42) vorbestimmt,
nach dem Schritt des Aktivierens (108; 210; 302) der virtuellen Übertragung einen Schritt zum Wiederherstellen (114; 216; 302), gemäß dem die Steuereinheiten zum Umwandeln der bei der virtuellen Übertragung angeforderten Speichereinheiten deren Speicherung oder Auslagerung von Energie befehlen, um deren Referenzfüllung zu erreichen,
die Referenzfüllung ist für jede der Speichereinheiten (24, 30, 36, 42) mindestens nach den folgenden Regeln vorbestimmt:
- wenn die Überlastungsrichtung gleichwahrscheinlich ist, ist die Referenzfüllung somit die Füllung auf halber Kapazität einer jeden betroffenen Speichereinheit,
- wenn die Überlastung immer in derselben Übertragungsrichtung erfolgt, ist die Referenzfüllung für jede Speichereinheit, die sich stromaufwärts befindet, die geringstmögliche Ladestufe, und die Referenzfüllung jede Speichereinheit, die sich stromabwärts befindet, die höchstmögliche Ladestufe, und
- für jede Zwischenlage wird die Referenzfüllung als monotone Funktion definiert, welche die beiden vorstehenden Regeln interpoliert.

7. Installation zum optimierten Übertragen von elektrischem Strom, die beinhaltet:
- ein Netz (10) zum Übertragen von elektrischem Strom, das beinhaltet:
• mindestens eine elektrische Leitung (L1, L2, L3, L4, L5),
• eine Vielzahl von Energiespeichereinheiten (24, 30, 36, 42), die an eine Vielzahl der Enden der mindestens einen elektrischen Leitung angeschlossen sind, und
• Steuereinheiten (28, 34, 40, 46) zum Umwandeln von gespeicherter Energie in elektrischen Strom und umgekehrt, zwischen jeder Speichereinheit und dem oder den Leitungsende(n), an das oder die sie angeschlossen ist,
- ein System zum Optimieren (12) nach Anspruch 6,
- ein Telekommunikationsnetz (14) für einen Austausch von Füllinformationen und Befehlen zum Speichern/Auslagern zwischen der Steuereinheit (54) des Systems zum Optimieren (12) und den Steuereinheiten (28, 34, 40, 46) zum Umwandeln des Netzes (10) zum Übertragen von elektrischem Strom.

8. Installation nach Anspruch 7, wobei die Energiespeichereinheiten (24, 30, 36, 42) im Inneren von elektrischen Stellwerken (16, 18, 20, 22) zum Anschließen von elektrischen Leitungen (L1, L2, L3, L4, L5) des Netzes (10) zum Übertragen von elektrischem Strom angeordnet sind.

## Claims

1. A method for optimizing the functioning of an electrical current transmission network (10), the network comprising at least one electrical line (L1, L2, L3, L4, L5), a plurality of energy storage units (24, 30, 36, 42) connected to a plurality of ends of said at least one electrical line and controllers (28, 34, 40, 46) for converting stored energy into electric current and reciprocally between each storage unit and the line end(s) to which it is connected, the method for optimizing comprising the following steps:
- maintaining up to date (100; 200; 300) in memory (56) of filling information of each one of the storage units (24, 30, 36, 42) supplied by the conversion controllers (28, 34, 40, 46),
- commanding (108; 210; 302) of the conversion controllers (28, 34, 40, 46), by sending energy storage or release commands in or from the storage units (24, 30, 36, 42),
the method further comprising the following steps:
- selecting (104; 206) a first assembly S1 of at least one storage unit connected to a first assembly E1 of at least one line end,
- selecting (104; 206) a second assembly S2 of at least one storage unit connected to a second assembly E2 of at least one line end,
- based on (106; 208) the filling information maintained up to date in memory (56), activation (108; 210; 302) of a virtual transmission of quantity Q of electrical current from the first assembly E1 toward the second assembly E2 by jointly sending to the concerned conversion controllers:
• at least one first command to store a quantity of energy, corresponding to the quantity Q of electrical current, in the first assembly S1, and
• at least one second command to release the same quantity of energy, corresponding to the quantity Q of electrical current, from the second assembly S2, and
- executing jointly (110; 212; 304) the storage and release commands by the concerned conversion controllers,
**characterized in that** a reference filling is predetermined for each of the storage units (24, 30, 36, 42), the method further comprising, following the virtual transmission activation step (108; 210; 302), a step of reconstitution (114; 216; 302) according to which the conversion controllers of the storage units that have been solicited during the virtual transmission command their energy storage or release, so as to reach their reference filling,
and wherein the reference filling is predetermined for each of the storage units (24, 25 30, 36, 42) at least according to the following rules:
- if the congestion direction is equiprobable, then the reference filling is the half-capacity filling of each storage unit concerned,
- if congestion always occurs in the same transmission direction, then the reference filling for each upstream storage unit will be the lowest possible load level, and the reference filling for each downstream storage unit will be the highest possible load level, and
- for any intermediate situation, the reference filling is defined as a monotonic function interpolating the two previous rules.

2. The method for optimizing according to claim 1, wherein the storage and release commands sent during the activation (108; 210; 302) of the virtual transmission of the quantity Q of electrical current are executed by the concerned conversion controllers for a zero total energy balance of the storage units of the assemblies S1 and S2, to the nearest energy efficiency losses.

3. The method for optimizing according to claim 1, wherein the step of reconstitution (114; 216; 302) is executed in such a way as to never solicit an exceeding of the maximum electrical current transmission capacity of said at least one electrical line (L1, L2, L3, L4, L5).

4. The method for optimizing according to any of claims 1 to 3, wherein, each electrical line (L1, L2, L3, L4, L5) having a maximum electrical current transmission capacity, the virtual transmission of the quantity Q of electrical current is activated (108; 210; 302) when at least one electrical line located between the assemblies E1 and E2 is solicited (102; 202) to temporarily transmit a quantity of electrical current that exceeds its maximum capacity by a quantity greater than or equal to the quantity Q.

5. The method for optimizing according to any of claims 1 to 4, wherein:
- a main direction of congestion of at least one electrical line in the network is determined (202), and
- the selections (206) of the first and second assemblies S1, S2 are made so as to direct the virtual transmission in this main direction of congestion.

6. A system (12) for optimizing the functioning of an electrical current transmission network (10), the network comprising at least one electrical line (L1, L2, L3, L4, L5), a plurality of energy storage units (24, 30, 36, 42) connected to a plurality of ends of said at least one electrical line and controllers (28, 34, 40, 46) for converting stored energy into electrical current and reciprocally between each storage unit and the line end(s) to which it is connected, the system for optimizing (12) comprising:
- a memory (56) maintaining up to date filling information on each one of the storage units (24, 30, 36, 42),
- a command unit (54), with a read/write connection to the memory (56) and exchanging with the conversion controllers (28, 34, 40, 46), programmed (58) to send energy storage or release commands in or from the storage units (24, 30, 36, 42),
wherein the command unit (54) is furthermore programmed (58) to:
- select a first assembly S1 of at least one storage unit connected to a first assembly E1 of at least one line end,
- select a second assembly S2 of at least one storage unit connected to a second assembly E2 of at least one line end,
- based on the filling information maintained up to date in memory (56), activate a virtual transmission of quantity Q of electrical current from the first assembly E1 toward the second assembly E2 while jointly sending to the concerned conversion controllers:
• at least one first command to store a quantity of energy, corresponding to the quantity Q of electrical current, in the first assembly S1, and
• at least one second command to release the same quantity of energy, corresponding to the quantity Q of electrical current, from the second assembly S2,
**characterized in that** the command unit (54) is furthermore programmed (58) to execute the following steps:
a reference filling is predetermined for each of the storage units (24, 25 30, 36, 42),
following the virtual transmission activation step (108; 210; 302), a step of reconstitution (114; 216; 302) according to which the conversion controllers of the storage units that have been solicited during the virtual transmission command their energy storage or release so as to reach their reference filling,
the reference filling is predetermined for each of the storage units (24, 25 30, 36, 42) at least according to the following rules:
- if the congestion direction is equiprobable, then the reference filling is the half-capacity filling of each storage unit concerned,
- if congestion always occurs in the same transmission direction, then the reference filling for each upstream storage unit will be the lowest possible load level, and the reference filling for each downstream storage unit will be the highest possible load level, and
- for any intermediate situation, the reference filling is defined as a monotonic function interpolating the two previous rules.

7. An equipment for optimized transmission of electrical current comprising:
- an electrical current transmission network (10) comprising:
• at least one electrical line (L1, L2, L3, L4, L5),
• a plurality of energy storage units (24, 30, 36, 42) connected to a plurality of ends of said at least one electrical line, and
• controllers (28, 34, 40, 46) for converting stored energy into electrical current or reciprocally between each storage unit and the line end(s) to which it is connected,
- a system for optimizing (12) according to claim 6, and
- a telecommunications network (14) for an exchange of the filling information and storage/release commands between the command unit (54) of the system for optimizing (12) and the conversion controllers (28, 34, 40, 46) of the electrical current transmission network (10).

8. The equipment according to claim 7, wherein the storage units (24, 30, 36, 42) are arranged inside electrical substations (16, 18, 20, 22) for connecting electrical lines (L1, L2, L3, L4, L5) of the electrical current transmission network (10).
